# EUROPEAN PATENT SPECIFICATION

(11) **EP 2 946 834 B1**
(45) Date of publication and mention of the grant of the patent: **11.07.2018**
(21) Application number: 15168625.0
(22) Date of filing: 21.05.2015
(51) Int. Cl.: B01L 9/06, G01N 35/00

(54) **MAGNETIC TUBE RACK**
MAGNETISCHES REAGENZGLASGESTELL
SUPPORT MAGNÉTIQUE DES ÉPROUVETTES

(30) Priority: 22.05.2014 CN 201420264902 U; 27.06.2014 US 201414317969
(43) Date of publication of application: 25.11.2015
(73) Proprietor: Bio-rad Laboratories, Inc., Hercules, CA 94547 (US); BioCanal, Wuxi Jiangsu 21400 (CN)
(72) Inventor: Tyagi, Amandeep, Hecules, CA 94547 (US); Xu, James, Hercules, CA 94547 (US); Lu, Shengjue, Hercules, CA 94547 (US); Yuan, Haihui, Hercules, CA 94547 (US)
(74) Representative: dompatent von Kreisler Selting Werner - Partnerschaft von Patent- und Rechtsanwälten mbB

(56) References cited:
- US-A- 4 895 650
- US-A- 5 571 481
- US-A1- 2013 209 995
- US-B1- 6 193 892

## Description

### BACKGROUND OF THE INVENTION

Immunoprecipitation is a laboratory technique for isolating a protein from a solution. In one technique, paramagnetic beads are coated with antibodies specific to the protein of interest, and the beads are introduced into the solution and the proteins of interest bind to the antibodies on the beads. A magnet is used to retain the beads in a localized part of the container in which the solution is held. The solution is then pipetted or poured out of the container, leaving the beads in the container and coated with the protein of interest. The magnet and the container can then be separated so that the beads can be easily removed from the container for further processing. Suitable systems for holding and processing such sample containers are disclosed in US Patents 5,571,481 and 6,193,892 and US Application Publication 2013/209995.

Typically, multiple containers are handled in a group, in order to increase the efficiency of the isolation. Improvements are needed in devices for managing such groups of containers for immunoprecipitation and other techniques.

### BRIEF SUMMARY OF THE INVENTION

According to one aspect, a system for holding sample tubes comprises a rack with a top plate defining a first plurality of holes. Each of the first plurality of holes is a through hole through the top plate and is sized for accommodating an outer diameter of a respective sample tube. The system also comprises a bottom plate defining a second plurality of holes. Each of the second plurality of holes is sized to accommodate a tip of a respective sample tube. The first and second pluralities of holes are positioned to cooperatively hold the sample tubes in a pair of parallel rows. The system also comprises a removable magnet holder configured to slide between the top plate and the bottom plate and between the two rows of sample tubes. The magnet holds a plurality of magnets that, when the magnet holder is fully inserted between the rows of sample tubes, align with the sample tubes in the parallel rows. The system further comprises a pair of end plates to which the top and bottom plates are attached at opposing ends, and that hold the top and bottom plates in spaced-apart relation. A first of the two endplates defines an opening through which the magnet holder slides when the magnet holder is inserted between the rows of sample tubes. The system further comprises a ferromagnetic retainer affixed to the second of the two endplates and aligned with a distal end of the magnet holder, such that the magnet nearest the distal end of the magnet holder and the ferromagnetic retainer, by magnetic attraction, cooperate to removably retain the magnet holder in position between the rows of sample tubes. Each of the second plurality of holes may be sized to engage a tapered tip of a respective sample tube in a press fit. In some embodiments, each of the second plurality of holes includes a round portion sized to engage a tapered tip of a respective sample tube in a press fit and an oblong portion having a width less than the diameter of the round portion, the oblong portion extending from the round portion toward an outside edge of the bottom plate. The first and second pluralities of holes may be sized to engage micro-centrifuge sample tubes each having a nominal capacity of 1.5 ml.

According to another aspect, a method comprises inserting a plurality of sample tubes into a rack. The rack includes a top plate defining a first plurality of holes and includes a bottom plate spaced apart from the top plate. The bottom plate defines a second plurality of holes, the first and second pluralities of holes cooperating to hold the sample tubes in a pair of parallel rows. The rack further includes a pair of end plates to which the top and bottom plates are attached at opposing ends, and that hold the top and bottom plates in spaced-apart relation, wherein a first of the two endplates defines an opening through which a magnet holder slides when the magnet holder is inserted between the rows of sample tubes. The method further comprises sliding a magnet holder between the top and bottom plate and between the two parallel rows such that a plurality of magnets held by the magnet holder align with the sample tubes in the parallel rows. The method further comprises contacting a distal end of the magnet holder with a ferromagnetic retainer affixed to the second of the two endplates and aligned with a distal end of the magnet holder, such that the magnet nearest the distal end of the magnet holder and the ferromagnetic retainer, by magnetic attraction, cooperate to removably retain the magnet holder in position between the rows of the sample tubes. In some embodiments, the method further comprises placing the rack in a rest position, and removing the magnet holder without disturbing the rack from its rest position.

In some embodiments of the above system, the system further comprises a plurality of sample tubes. In some embodiments, each of the sample tubes has a nominal capacity of 1.5 ml.

When the magnet holder is fully inserted between the rows of sample tubes, magnets held by the magnet holder align with the sample tubes in the two parallel rows. In some embodiments, when the magnet holder is inserted between the rows of sample tubes, no material is disposed between the magnets and the sample tubes. In some embodiments, the magnet holder can be removed from the rack without disturbing the position of the rack. In some embodiments, the holes in the bottom plate are sized to engage the sample tubes in a press fit, such that the sample tubes remain in fixed positions in relation to the rack during laboratory handling. In some embodiments, each of the holes in the bottom plate defines an oblong portion extending toward an outer edge of the bottom plate and enabling visual inspection of the tip of a sample tube inserted into the respective hole in the bottom plate.

### BRIEF DESCRIPTION OF THE DRAWINGS

FIG. 1 illustrates a magnetic tube rack in accordance with embodiments of the invention.
FIG. 2 illustrates a sample tube usable in embodiments of the invention.
FIG. 3 shows a portion of FIG. 1 in more detail.
FIG. 4 illustrates the magnetic tube rack of FIG. 1 with a magnet holder partially withdrawn, in accordance with embodiments of the invention.
FIG. 5 shows the interaction of the magnet holder and a retainer, in accordance with embodiments of the invention.

### DETAILED DESCRIPTION OF THE INVENTION

In prior systems used for immunoprecipitation, a rack holds a plurality of sample tubes above one or more magnets. Separating the magnet from the sample tubes (for freeing the beads after the solution has been removed) involves lifting the rack. In general, it is desirable to minimize the amount of handling that the sample tubes are subjected to.

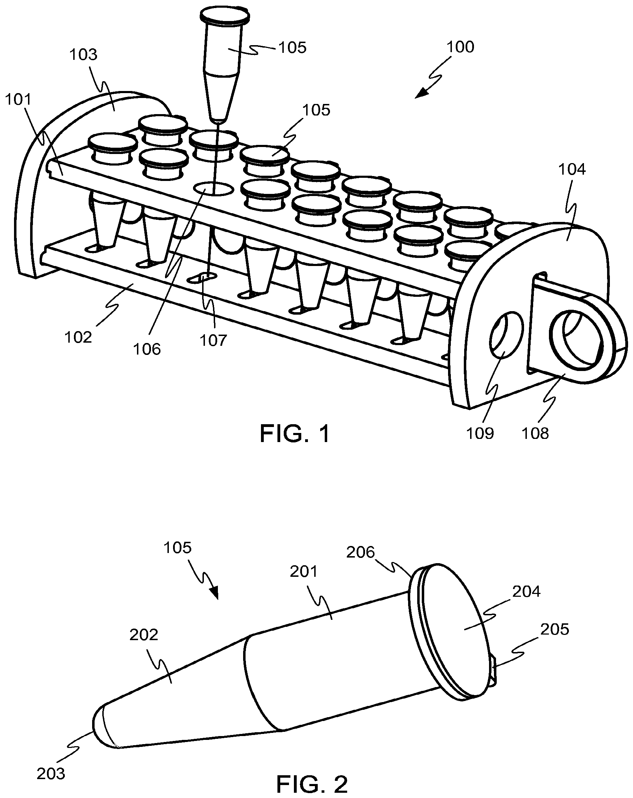

FIG 1. illustrates a magnetic tube rack 100 in accordance with embodiments of the invention. Magnetic tube rack **100** comprises a top plate **101** and a bottom plate **102,** held in spaced-apart relation by end plates **103** and **104.** Top and bottom plates **101** and **102** and end plates **103** and **104** may be made of any suitable material or combinations of materials, for example polycarbonate, acrylic, ABS, acetal, aluminum, one or more composites, or other materials. Preferably, the materials used in constructing magnetic tube rack **100** are sturdy and easily cleaned. The components of magnetic tube rack **100** may be joined by any suitable method, for example by solvent bonding, by one or more adhesives, using fasteners, or by another technique or combination of techniques.

Magnetic tube rack **100** is configured for handling of a number of sample tubes **105.** In the example embodiment of FIG. 1, sample tubes **105** are typical micro-centrifuge tubes having a nominal capacity of 1.5 ml, but it will be recognized that other kinds and sizes of sample tubes may be used in embodiments of the invention.

**FIG. 2** illustrates one of sample tubes **105** in more detail. Sample tube **105** includes a main portion **201** having an outer diameter, and a tapered end portion **202** that tapers to a tip **203.** A cap **204** may be integrally formed with the rest of sample tube **105,** for example via a living hinge **205** formed during an injection molding process. Cap **204** may be used for closing sample tube **105,** and may engage with a flange **206,** which extends beyond the outer diameter of main portion **201.** Sample tube **105** is typically thin-walled, and made of a polymer such as polypropylene. Sample tube **105** may have a capacity of about 1.5 ml, a main portion **201** diameter of about 10.8 mm, and an overall length of about 41 mm.

Referring again to FIG. 1, upper plate **101** defines a plurality of through holes **106,** of a size to accommodate the outer diameter of main portions **201** of sample tubes **105** in a loose fit. In this example, magnetic tube rack **100** is configured to hold 16 sample tubes **105,** but other embodiments may accommodate more or fewer sample tubes.

Bottom plate **102** defines a second plurality of holes **107.** Holes **107** may be through holes or blind recesses within bottom plate **102.** Each of holes **107** is sized to accommodate the tip of its respective sample tube **105.** In some embodiments, sample tubes **105** may be pressed into holes **107,** so that tapered portions **202** of the sample tubes press into holes **107** and constrain the height of sample tubes **105** within rack **100.** This press fit also constrains sample tubes **105** from rotating during normal laboratory handling of rack **100.**

A magnet holder **108,** described in more detail below, operates in conjunction with magnetic tube rack **100,** to facilitate experiments conducted using magnetic tube rack **100.** Magnet holder **108** may be made of materials similar to the materials of top, bottom, and end plates **101-104.**

A pair of larger openings **109** (only one of which is visible in FIG. 1) may be placed symmetrically in end plate **104,** and allow insertion of a pair of larger (50 ml e.g.) centrifuge tubes in lieu of sample tubes **105,** for performing procedures on larger samples.

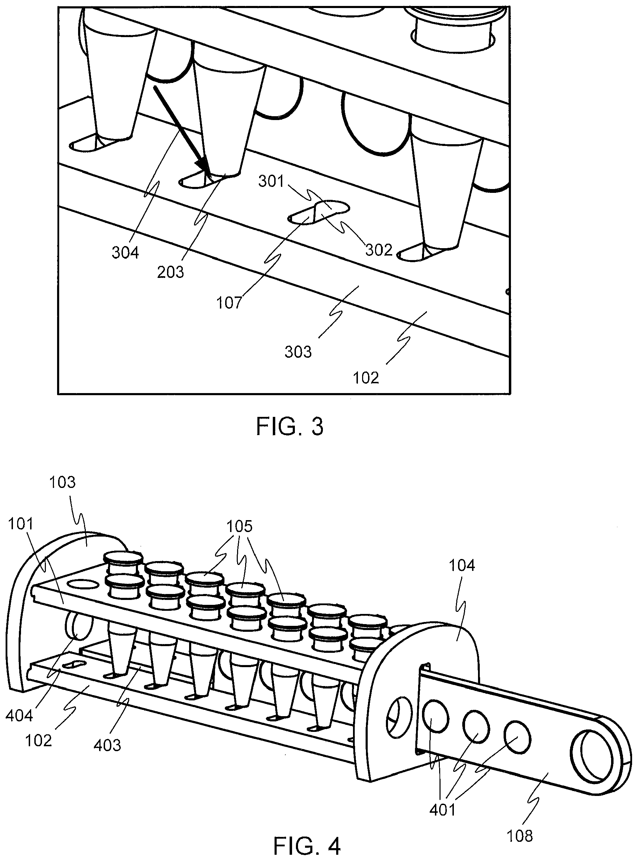

**FIG. 3** shows a portion of FIG. 1 in more detail, and illustrates other aspects of holes **107,** according to embodiments. In this example, each of holes **107** includes a round portion **301** sized to accommodate tip **203** of the respective sample tube **105.** Each hole **107** also includes an oblong portion **302,** extending toward outer edge **303** of bottom plate **102.** Round portion **301** and oblong portion **302** may combine to form a keyhole shape, with the width of oblong portion **302** being less than the diameter of round portion **301.** Preferably, oblong portion **302** is narrower than the diameter of round portion **301,** so that round portion **301** can provide a press fit to tip **203.** Oblong portion **302** may be rectangular, rectangular with a rounded end as shown in FIG. 3, or another suitable shape. Because oblong portion **302** extends toward outer edge **303,** it permits viewing of sample tube tip **203** by a user of rack **100,** as illustrated by viewing direction arrow **304.** This aspect may be especially useful when performing experiments using very small quantities of sample fluids that would otherwise not be visible in tip **203.**

**FIG. 4** illustrates magnetic tube rack **100** with magnet holder **108** partially withdrawn. Magnet holder **108** holds a number of magnets **401** such that when magnet holder **108** is fully inserted into rack **100,** the magnets align with tubes **105.** Magnets **401** may be affixed to magnet holder **108** in any suitable way, for example by being press fit into holes in magnet holder **108,** or by being secured within holes in magnet holder **108** using an adhesive. In one embodiment, magnets **401** are affixed to magnet holder **108** using an ultraviolet-curing adhesive. Preferably, larger openings **109** (shown in FIG. 1) are positioned such that when larger centrifuge tubes are placed in openings **109** and magnet holder **108** is inserted into rack **100,** magnets **401** align with the axes of the larger centrifuge tube.

As is visible in FIG. 4, end plate **104** of rack **100** defines an opening **402** through which magnet holder **108** is inserted into rack **100.** Top and bottom plates **101** and **102** also include grooves **403** (only the groove on bottom plate **102** is visible). Opening **402** and grooves **403** serve to guide magnet holder **108** into its proper position between the rows of tubes **105.**

A ferromagnetic retainer **404** is affixed to end plate **103,** opposite opening **402.** Retainer **404** serves as a stop or bumper against which magnet holder **108** can rest when it is fully inserted into rack **100,** and also provides a mechanism for removably retaining magnet holder **108** in rack **100.** Retainer **404** may itself be a magnet, or may simply be a ferromagnetic material to which magnets **401** may be attracted.

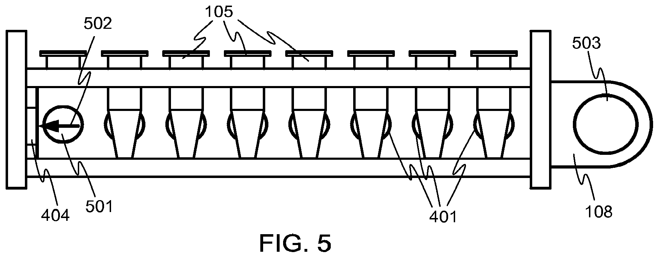

**FIG. 5** shows the interaction of magnet holder **108** and retainer **404** in more detail, in accordance with embodiments of the invention. In FIG. 5, magnet holder **108** is fully inserted into rack **100,** such that magnet holder **108** contacts retainer **404.** Additionally, because retainer **404** is ferromagnetic, end magnet **501** is attracted to retainer **404,** and provides a force **502** tending to hold magnet holder **108** against retainer **404.** As is visible in FIG. 5, in this position, each of the magnets is aligned between two of tubes **105.** Force **502** provided by the attraction of end magnet **501** and retainer **404** is sufficient to maintain magnet holder **108** in its fully-inserted position during normal laboratory handling of rack **100,** for example if rack **100** is lifted or tilted, but is easily overcome by pulling magnet holder **108** away from retainer **404,** for example by pulling via opening **503.** Thus, magnet holder **108** can be removed without disturbing rack **100** from a rest position. For example, a user may hold rack **100** down to a bench top while pulling magnet holder **108** away from retainer **404,** so that rack **100** does not move during the extraction of magnet holder **108.** There is no need to pick up rack **100** to separate it from magnets **401.** The lack of disturbance of rack **100** may be beneficial to later process steps. In addition, as is evident in the figures, once magnet holder **108** is inserted into rack **100,** there is no material (other than air) between magnets **401** and sample tubes **105** that might interfere with the magnetic attraction between magnets **401** and the beads in sample tubes **105.**

In the claims appended hereto, the term "a" or "an" is intended to mean "one or more." The term "comprise" and variations thereof such as "comprises" and "comprising," when preceding the recitation of a step or an element, are intended to mean that the addition of further steps or elements is optional and not excluded.

## Claims

1. A system for holding sample tubes, the system comprising:
a rack (100) with a top plate (101) defining a first plurality of holes (106), each of the first plurality of holes (106) being a through hole through the top plate (101) and sized for accommodating an outer diameter of a respective sample tube (105);
a bottom plate (102) defining a second plurality of holes (107), each of the second plurality of holes (107) sized to accommodate a tip (203) of a respective sample tube (105), wherein the first and second pluralities of holes (106, 107) are positioned to cooperatively hold the sample tubes (105) in a pair of parallel rows;
a pair of end plates (103, 104) to which the top and bottom plates (101, 102) are attached at opposing ends, and that hold the top and bottom plates (101, 102) in spaced-apart relation; and
a removable magnet holder (108) configured to slide between the top plate (101) and the bottom plate (102) and between the two rows of sample tubes (105), the magnet holder (108) holding a plurality of magnets (401) that, when the magnet holder (108) is fully inserted between the rows of sample tubes (105), align with the sample tubes (105) in the parallel rows,
wherein a first of the two endplates (104) defines an opening (402) through which the magnet holder (108) slides when the magnet holder is inserted between the rows of sample tubes (105);
and wherein the system further comprises a ferromagnetic retainer (404) affixed to the second of the two endplates (103) and aligned with a distal end of the magnet holder (108), such that the magnet nearest the distal end of the magnet holder (108) and the ferromagnetic retainer (404), by magnetic attraction, cooperate to removably retain the magnet holder (108) in position between the rows of sample tubes (105).

2. The system of claim 1, wherein each of the second plurality of holes (107) is sized to engage a tapered tip (203) of a respective sample tube (105) in a press fit.

3. The system of claim 1, wherein each of the second plurality of holes (107) includes a round portion (301) sized to engage a tapered tip (203) of a respective sample tube (105) in a press fit and an oblong portion (302) having a width less than the diameter of the round portion (301), the oblong portion (302) extending from the round portion toward an edge of the bottom plate (102).

4. The system of claim 1, wherein the first and second pluralities of holes (106, 107) are sized to engage micro-centrifuge sample tubes each having a nominal capacity of 1.5 ml.

5. The system of claim 1, further comprising: a plurality of sample tubes (105).

6. The system of claim 5, wherein each of the sample tubes (105) has a nominal capacity of 1.5 ml.

7. The system of claim 5, wherein when the magnet holder (108) is inserted between the rows of sample tubes (105), no material is disposed between the magnets (401) and the sample tubes (105).

8. The system of claim 5, wherein the holes (107) in the bottom plate (102) are sized to engage the sample tubes (105) in a press fit, such that the sample tubes (105) remain in fixed positions in relation to the rack (100) during laboratory handling.

9. The system of claim 8, wherein each of the holes (107) in the bottom plate (102) defines an oblong portion (302) extending toward an edge of the bottom plate (102) and enabling visual inspection of the tip (203) of a sample tube (105) inserted into the respective hole in the bottom plate (102).

10. A method, comprising:
inserting a plurality of sample tubes (105) into a rack (100), the rack (100) including a top plate (101) defining a first plurality of through holes (106) and including a bottom plate (102) spaced apart from the top plate (101), the bottom plate (102) defining a second plurality of holes (107), the first and second pluralities of holes (106, 107) cooperating to hold the sample tubes (105) in a pair of parallel rows, the rack further including a pair of end plates (103, 104) to which the top and bottom plates (101, 102) are attached at opposing ends, and that hold the top and bottom plates (101, 102) in spaced-apart relation, wherein a first of the two endplates (104) defines an opening (402) through which a magnet holder (108) slides when the magnet holder is inserted between the rows of sample tubes (105);
sliding a magnet holder (108) between the top and bottom plate (101, 102) through the opening (402) in the first end plate (104) and between the two parallel rows such that a plurality of magnets (401) held by the magnet holder (108) align with the sample tubes (105) in the parallel rows; and
contacting a distal end of the magnet holder (108) with a ferromagnetic retainer (404) affixed to the second of the two endplates (103) and aligned with a distal end of the magnet holder (108), such that the magnet nearest the distal end of the magnet holder (108) and the ferromagnetic retainer (404), by magnetic attraction, cooperate to removably retain the magnet holder (108) in position between the rows of the sample tubes (105).

11. The method of claim 10, further comprising:
placing the rack (100) in a rest position; and
removing the magnet holder (108) without disturbing the rack (100) from its rest position.

## Patentansprüche

1. System zum Halten von Probenröhrchen, wobei das System umfasst:
einen Ständer (100) mit einer oberen Platte (101), die eine erste Vielzahl von Löchern (106) definiert, wobei jedes der ersten Vielzahl von Löchern (106) ein Durchgangsloch durch die obere Platte (101) ist, das so dimensioniert ist, dass es einen Außendurchmesser eines jeweiligen Probenröhrchens (105) aufnehmen kann;
eine untere Platte (102), die eine zweite Vielzahl von Löchern (107) definiert, wobei jedes der zweiten Vielzahl von Löchern (107) so dimensioniert ist, dass es eine Spitze (203) eines jeweiligen Probenröhrchens (105) aufnehmen kann, wobei die erste und die zweite Vielzahl von Löchern (106, 107) so positioniert sind, dass sie kooperativ die Probenröhrchen (105) in einem Paar von parallelen Reihen halten;
ein Paar von Endplatten (103, 104), an denen die obere und die untere Platte (101, 102) an entgegengesetzten Enden befestigt sind und die die obere und die untere Platte (101, 102) in einer beabstandeten Beziehung halten; und
einen abnehmbaren Magnethalter (108), der so konfiguriert ist, dass er zwischen der oberen Platte (101) und der unteren Platte (102) und zwischen den zwei Reihen von Probenröhrchen (105) gleitet, wobei der Magnethalter (108) eine Vielzahl von Magneten (401) hält, die dann, wenn der Magnethalter (108) vollständig zwischen den Reihen von Probenröhrchen (105) eingefügt ist, mit den Probenröhrchen (105) in den parallelen Reihen fluchten;
wobei eine erste der beiden Endplatten (104) eine Öffnung (402) definiert, durch die der Magnethalter (108) gleitet, wenn der Magnethalter zwischen die Reihen von Probenröhrchen (105) eingefügt wird;
und wobei das System weiterhin einen ferromagnetischen Halter (404) umfasst, der an der zweiten der beiden Endplatten (103) befestigt ist und mit einem distalen Ende des Magnethalters (108) fluchtet, so dass der Magnet, der dem distalen Ende des Magnethalters (108) am nächsten ist, und der ferromagnetische Halter (404) durch magnetische Anziehung zusammenwirken und dadurch den Magnethalter (108) zwischen den Reihen von Probenröhrchen (105) abnehmbar auf Position halten.

2. System gemäß Anspruch 1, wobei jedes der zweiten Vielzahl von Löchern (107) so dimensioniert ist, dass es an einer sich verjüngenden Spitze (203) eines jeweiligen Probenröhrchens (105) in Presspassung angreift.

3. System gemäß Anspruch 1, wobei jedes der zweiten Vielzahl von Löchern (107) einen runden Teil (301), der so dimensioniert ist, dass er an einer sich verjüngenden Spitze (203) eines jeweiligen Probenröhrchens (105) in Presspassung angreift, und einen ovalen Teil (302), der eine Breite aufweist, die kleiner ist als der Durchmesser des runden Teils (301), umfasst, wobei sich der ovale Teil (302) ausgehend von dem runden Teil hin zu einem Rand der unteren Platte (102) erstreckt.

4. System gemäß Anspruch 1, wobei die erste und die zweite Vielzahl von Löchern (106, 107) so dimensioniert sind, dass sie an Mikrozentrifugenprobenröhrchen, die jeweils eine Nennkapazität von 1,5 ml aufweisen, angreifen.

5. System gemäß Anspruch 1, weiterhin umfassend eine Vielzahl von Probenröhrchen (105).

6. System gemäß Anspruch 5, wobei jedes der Probenröhrchen (105) eine Nennkapazität von 1,5 ml aufweist.

7. System gemäß Anspruch 5, wobei dann, wenn der Magnethalter (108) zwischen den Reihen von Probenröhrchen (105) eingefügt ist, sich kein Material zwischen den Magneten (401) und den Probenröhrchen (105) befindet.

8. System gemäß Anspruch 5, wobei die Löcher (107) in der unteren Platte (102) so dimensioniert sind, dass sie in Presspassung an den Probenröhrchen (105) angreifen, so dass die Probenröhrchen (105) während der Handhabung im Labor in festen Positionen in Bezug auf den Ständer (100) verbleiben.

9. System gemäß Anspruch 8, wobei jedes der Löcher (107) in der unteren Platte (102) einen ovalen Teil (302) definiert, der sich zu einem Rand der unteren Platte (102) erstreckt und die visuelle Untersuchung der Spitze (203) eines Probenröhrchens (105), das in das jeweilige Loch in der unteren Platte (102) eingefügt ist, ermöglicht.

10. Verfahren, umfassend:
Einfügen einer Vielzahl von Probenröhrchen (105) in einen Ständer (100), wobei der Ständer (100) eine obere Platte (101) umfasst, die eine erste Vielzahl von Durchgangslöchern (106) definiert, und eine untere Platte (102) umfasst, die von der oberen Platte (101) beabstandet ist, wobei die untere Platte (102) eine zweite Vielzahl von Löchern (107) definiert, wobei die erste und die zweite Vielzahl von Löchern (106, 107) so zusammenwirken, dass sie die Probenröhrchen (105) in einem Paar von parallelen Reihen halten, wobei der Ständer weiterhin ein Paar von Endplatten (103, 104) umfasst, an denen die obere und die untere Platte (101, 102) an entgegengesetzten Enden befestigt sind und die die obere und die untere Platte (101, 102) in einer beabstandeten Beziehung halten, wobei eine erste der beiden Endplatten (104) eine Öffnung (402) definiert, durch die ein Magnethalter (108) gleitet, wenn der Magnethalter zwischen die Reihen von Probenröhrchen (105) eingefügt wird;
Gleitenlassen eines Magnethalters (108) zwischen der oberen und der unteren Platte (101, 102) durch die Öffnung (402) in der ersten Endplatte (104) und zwischen den zwei parallelen Reihen, so dass eine Vielzahl von Magneten (401), die von dem Magnethalter (108) gehalten werden, mit den Probenröhrchen (105) in den parallelen Reihen fluchten; und
In-Kontakt-Bringen eines distalen Endes des Magnethalters (108) mit einem ferromagnetischen Halter (404), der an der zweiten der beiden Endplatten (103) befestigt ist und mit einem distalen Ende des Magnethalters (108) fluchtet, so dass der Magnet, der dem distalen Ende des Magnethalters (108) am nächsten ist, und der ferromagnetische Halter (404) durch magnetische Anziehung zusammenwirken und dadurch den Magnethalter (108) zwischen den Reihen von Probenröhrchen (105) abnehmbar auf Position halten.

11. Verfahren gemäß Anspruch 10, weiterhin umfassend:
Platzieren des Ständers (100) in einer Ruheposition; und
Abnehmen des Magnethalters (108), ohne den Ständer (100) aus seiner Ruheposition zu stören.

## Revendications

1. Système pour le maintien d'éprouvettes, le système comprenant :
un râtelier (100) pourvu d'une plaque supérieure (101) définissant une première pluralité d'orifices (106), chacun de la première pluralité d'orifices (106) étant un orifice traversant la plaque supérieure (101) et dimensionné pour recevoir un diamètre extérieur d'une éprouvette (105) respective ;
une plaque inférieure (102) définissant une seconde pluralité d'orifices (107), chacun de la seconde pluralité d'orifices (107) étant dimensionné pour recevoir une pointe (203) d'une éprouvette (105) respective, dans lequel les première et seconde pluralités d'orifices (106, 107) sont positionnées pour maintenir de manière coopérative les éprouvettes (105) en une paire de rangées parallèles ;
une paire de plaques d'extrémité (103, 104) auxquelles sont fixées les plaques supérieure et inférieure (101, 102) à des extrémités opposées, et qui maintiennent les plaques supérieure et inférieure (101, 102) de façon espacée ; et
un support magnétique amovible (108) configuré pour coulisser entre la plaque supérieure (101) et la plaque inférieure (102) et entre les deux rangées d'éprouvettes (105), le support magnétique (108) supportant une pluralité d'aimants (401) qui, lorsque le support magnétique (108) est totalement inséré entre les rangées d'éprouvettes (105), s'alignent avec les éprouvettes dans les rangées parallèles,
dans lequel une première des deux plaques d'extrémité (104) définit une ouverture (402) à travers laquelle le support magnétique (108) coulisse lorsque le support magnétique est inséré entre les rangées d'éprouvettes (105) ;
et dans lequel le système comprend, en outre, un organe de retenue ferromagnétique (404) fixé à la seconde des deux plaques d'extrémité (103) et aligné avec une extrémité distale du support magnétique (108) de telle sorte que l'aimant le plus proche de l'extrémité distale du support magnétique (108) et l'organe de retenue ferromagnétique (404) coopèrent, par attraction magnétique, pour maintenir de façon amovible le support magnétique (108) en position entre les rangées d'éprouvettes (105).

2. Système selon la revendication 1, dans lequel chacun de la seconde pluralité d'orifices (107) est dimensionné pour venir en prise avec une pointe conique (203) d'une éprouvette (105) respective par ajustement serré.

3. Système selon la revendication 1, dans lequel chacun de la seconde pluralité d'orifices (107) comprend une partie ronde (301) dimensionnée pour venir en prise avec une pointe conique (203) d'une éprouvette (105) respective par ajustement serré et une partie oblongue (302) dont la largeur est inférieure au diamètre de la partie ronde (301), la partie oblongue (302) s'étendant de la partie ronde vers un bord de la plaque inférieure (102).

4. Système selon la revendication 1, dans lequel les première et seconde pluralités d'orifices (106, 107) sont dimensionnées pour venir en prise avec des éprouvettes de micro-centrifugeuse ayant chacune une capacité nominale de 1,5 ml.

5. Système selon la revendication 1, comprenant, en outre : une pluralité d'éprouvettes (105).

6. Système selon la revendication 5, dans lequel chacune des éprouvettes (105) a une capacité nominale de 1,5 ml.

7. Système selon la revendication 5, dans lequel le support magnétique (108) est inséré entre les rangées d'éprouvettes (105), aucun matériau n'étant disposé entre les aimants (401) et les éprouvettes(105).

8. Système selon la revendication 5, dans lequel les orifices (107) dans la plaque inférieure (102) sont dimensionnés pour venir en prise avec les éprouvettes (105) par ajustement serré, de telle sorte que les éprouvettes (105) demeurent dans des positions fixes par rapport au râtelier (100) lors des manipulations en laboratoire.

9. Système selon la revendication 8, dans lequel chacun des orifices (107) dans la plaque inférieure (102) définit une partie oblongue (302) s'étendant vers un bord de la plaque inférieure (102) et permettant l'inspection visuelle de la pointe (203) d'une éprouvette (105) insérée dans l'orifice respectif dans la plaque inférieure (102).

10. Procédé comprenant les étapes suivantes ;
insérer une pluralité d'éprouvettes (105) dans un râtelier (100), le râtelier (100) comprenant une plaque supérieure (101) définissant une première pluralité d'orifices traversants (106) et comprenant une plaque inférieure (102) espacée de la plaque supérieure (101), la plaque inférieure (102) définissant une seconde pluralité d'orifices (107), les première et seconde pluralités d'orifices (106, 107) coopérant pour maintenir les éprouvettes (105) en une paire de rangées parallèles, le râtelier comprenant, en outre, une paire de plaques d'extrémité (103, 104) auxquelles sont fixées les plaques supérieure et inférieure (101, 102) à des extrémités opposées, et qui maintiennent les plaques supérieure et inférieure (101, 102) de façon espacée, une première des deux plaques d'extrémité (104) définissant une ouverture (402) à travers laquelle un support magnétique amovible (108) coulisse lorsque le support magnétique est inséré entre les rangées d'éprouvettes (105) ;
faire coulisser un support magnétique (108) entre la plaque supérieure et la plaque inférieure (101, 102) à travers l'ouverture (402) ménagée dans la première plaque d'extrémité (104) et entre les deux rangées parallèles de telle sorte qu'une pluralité d'aimants (401) maintenus par le support magnétique (108) s'aligne avec les éprouvettes (105) dans les rangées parallèles ; et
mettre en contact une extrémité distale du support magnétique (108) avec un organe de retenue ferromagnétique (404) fixé à la seconde des deux plaques d'extrémité (103) et aligné avec une extrémité distale du support magnétique (108), de telle sorte que l'aimant le plus proche de l'extrémité distale du support magnétique (108) et l'organe de retenue ferromagnétique (404) coopèrent, par attraction magnétique, pour maintenir de façon amovible le support magnétique (108) en position entre les rangées d'éprouvettes (105).

11. Procédé selon la revendication 10, consistant, en outre,
à placer le râtelier (100) en position de repos ; et
à retirer le support magnétique (108) sans que le râtelier (100) bouge de sa position de repos.
